# EUROPEAN PATENT APPLICATION

(11) **EP 4 838 073 A2**
(43) Date of publication of application: **11.11.2026**
(21) Application number: 26177044.0
(22) Date of filing: 06.05.2026
(51) Int. Cl.: F02C 7/047, F01D 25/02, F02C 9/18, F02K 3/06, F02K 3/075

(54) **GAS TURBINE ENGINE WITH BLEED AIR CONTROL SYSTEM**

(30) Priority: 06.05.2025 US 202519200176
(71) Applicant: RTX Corporation, Farmington, CT 06032 (US)
(72) Inventor: SIDELKOVSKIY, Dmitriy, Ellington, CT, 06029 (US); KUPRATIS, Daniel B., Wallingford, CT, 06492 (US); HANLON, Christopher J., Sturbridge, MA, 01566 (US); HANRAHAN, Paul R., Sedona, AZ, 86351 (US)
(74) Representative: Dehns

(57) **Abstract**

A gas turbine engine (20) is provided that includes a bleed air control system (88). An annular fan bypass air path (40) is defined by an outer bypass wall structure (42B) and an inner bypass wall structure (42A). An inner radial boundary structure (56A) and an outer radial boundary structure (56B) collectively define a core gas path (38). An annular compartment (58) is defined by the inner bypass wall structure (42A) and the outer radial boundary structure (56B). The bleed air control system (88) includes a bypass air path port (86), a compressor bleed port (82), a compressor bleed valve (84), and a core gas recirculation port (90). The bypass air path port (86) provides a fluid passage between the annular compartment (58) and the fan bypass air path (40). The compressor bleed valve (84) is in fluid communication with the compressor bleed port (82). The compressor bleed valve (84) is disposable in an open or closed state. The core gas recirculation port (90) is engaged with the outer radial boundary structure (56B).

## Description

### BACKGROUND OF THE INVENTION

### 1. Technical Field

The present disclosure relates to gas turbine engines in general and to gas turbine engines with a compressor bleed port in particular.

### 2. Background Information

A turbofan gas turbine engine includes a fan section, a compressor section, a combustion section, and a turbine section. Air entering the engine passes through the fan section. A portion of the air exiting the fan section enters a core gas path and the remainder enters a bypass air path disposed radially outside of the core of the engine. Air passing through the bypass air path produces thrust and exits the gas turbine engine. The core gas path extends through the core of the engine, including the compressor section, the combustion section, and the turbine section. Core gas (i.e., a mixture of non-combusted air and gaseous combustion products) exiting the turbine section passes through a turbine exhaust case and exits the engine. A person of skill in the art will recognize that under certain ground operating conditions and flight conditions, ice may build up on surfaces within the core gas path, which ice may be detrimental to the engine and its operation.

### SUMMARY

According to an aspect of the present invention, a gas turbine engine is provided that includes a fan section, a compressor section, a combustor section, a turbine section, an annular fan bypass air path, a core gas path, an annular compartment, and a bleed air control system. The compressor section has a low pressure compressor section and a high pressure compressor section. The annular fan bypass air path is defined by an outer bypass wall structure and an inner bypass wall structure. The core gas path extends from a compressor inlet and through the compressor section, the combustion section, and the turbine section. From the compressor inlet through the low pressure compressor section, an inner radial boundary structure and an outer radial boundary structure collectively define the core gas path. The annular compartment is defined by the inner bypass wall structure and the outer radial boundary structure. The bleed air control system includes a bypass air path port, a compressor bleed port, a compressor bleed valve, and a core gas recirculation port. The bypass air path port is engaged with the inner bypass wall structure, and is configured to provide a fluid passage between the annular compartment and the fan bypass air path. The compressor bleed port is engaged with the outer radial boundary structure at a position downstream of the low pressure compressor section and upstream of the high pressure compressor section (e.g., relative to a direction of core gas flow). The compressor bleed valve is in fluid communication with the compressor bleed port. The compressor bleed valve is disposable in an open state that allows a core gas flow bled from the core gas path to enter the annular compartment, and is disposable in a closed state (e.g., that prevents a core gas flow bled from the core gas path to enter the annular compartment). The core gas recirculation port is engaged with the outer radial boundary structure. Optionally, the core gas recirculation port may be, form or include a vane port engaged with the outer radial boundary structure and in fluid communication with a vane extending across the core gas path.

In any of the aspects or embodiments described above and herein, the gas turbine engine may further include a valve structure disposed in the annular compartment. The valve structure may be in fluid communication with the bypass air path port and the core gas recirculation port.

In any of the aspects or embodiments described above and herein, the valve structure may be disposable in a first closed configuration wherein fluid passage to the bypass air path port is closed, and disposable in a second closed configuration wherein fluid passage to the core gas recirculation port is closed.

In any of the aspects or embodiments described above and herein, the valve structure may be disposable in a first open configuration that provides fluid passage to and through the bypass air path port, and may be disposable in a second open configuration that provides fluid passage to and through the core gas recirculation port.

In any of the aspects or embodiments described above and herein, the valve structure may be disposable in the first open configuration and the second open configuration at the same time.

In any of the aspects or embodiments described above and herein, the valve structure may be disposable in both the first closed configuration and in the second open configuration at the same time.

In any of the aspects or embodiments described above and herein, the valve structure may be disposable in both the second closed configuration and in the first open configuration at the same time.

In any of the aspects or embodiments described above and herein, the core gas recirculation port may include a first core gas recirculation port engaged with the outer radial boundary structure at a first axial position disposed between the compressor inlet and the low pressure compressor section, and a second core gas recirculation port engaged with the outer radial boundary structure at a second axial position located downstream (e.g., relative a direction of the core gas flow) or aft (relative to an intended direction of travel) of the first axial position.

In any of the aspects or embodiments described above and herein, the gas turbine engine may include a plurality of struts that extend across the core gas path forward of the low pressure compressor section. The first axial position may be disposed adjacent a forward end of the plurality of struts and the second axial position may be disposed adjacent an aft end of the plurality of struts.

In any of the aspects or embodiments described above and herein, the bleed air control system may include a vane port engaged with the outer radial boundary structure. The vane port may be in fluid communication with a vane extending across the core gas path.

In any of the aspects or embodiments described above and herein, the bleed air control system may include an inner core gas recirculation port engaged with the inner radial boundary structure. The inner core gas recirculation port may be in fluid communication with a passage disposed within the vane and with the vane port.

In any of the aspects or embodiments described above and herein, the gas turbine engine may include a valve structure disposed in the annular compartment, and the valve structure may be in fluid communication with the bypass air path port, the core gas recirculation port, and the vane port.

In any of the aspects or embodiments described above and herein, the valve structure may be disposable in a first closed configuration wherein fluid passage to the bypass air path port is closed, and disposable in a second closed configuration wherein fluid passage to the core gas recirculation port is closed, and disposable in a third closed configuration wherein fluid passage to the vane port is closed.

In any of the aspects or embodiments described above and herein, the valve structure may be disposable in a first open configuration that provides fluid passage to and through the bypass air path port, disposable in a second open configuration that provides fluid passage to and through the core gas recirculation port, and disposable in a third open configuration that provides fluid passage to and through the vane port.

According to an aspect of the present invention, a gas turbine engine is provided that includes a fan section, a compressor section, a combustor section, a turbine section, an annular fan bypass air path, a core gas path, an annular compartment, and a bleed air control system. The compressor section has a low pressure compressor section and a high pressure compressor section. The annular fan bypass air path is defined by an outer bypass wall structure and an inner bypass wall structure. The core gas path extends from a compressor inlet and through the compressor section, the combustion section, and the turbine section. From the compressor inlet through the low pressure compressor section, an inner radial boundary structure and an outer radial boundary structure collectively define the core gas path. The annular compartment is defined by the inner bypass wall structure and the outer radial boundary structure. The bleed air control system includes a bypass air path port, a compressor bleed port, a compressor bleed valve, a vane port (e.g., a core gas recirculation port of the first aspect in the form of, or including, a vane port), and a valve structure. The bypass air path port is engaged with the inner bypass wall structure, and is configured to provide a fluid passage between the annular compartment and the fan bypass air path. The compressor bleed port is engaged with the outer radial boundary structure at a position downstream of the low pressure compressor section and upstream of the high pressure compressor section. The compressor bleed valve in fluid communication with the compressor bleed port. The compressor bleed valve is disposable in an open state that allows a core gas flow bled from the core gas path to enter the annular compartment, and is disposable in a closed state. The vane port is engaged with the outer radial boundary structure and is in fluid communication with a vane extending across the core gas path. The valve structure is disposed in the annular compartment. The valve structure is in fluid communication with the bypass air path port and the vane port.

In any of the aspects or embodiments described above and herein, the bleed air control system may include an inner core gas recirculation port engaged with the inner radial boundary structure. The inner core gas recirculation port may be in fluid communication with a passage disposed within the vane and with the vane port.

In any of the aspects or embodiments described above and herein, the valve structure is disposable in a first closed configuration wherein fluid passage to the bypass air path port is closed, and disposable in a second closed configuration wherein fluid passage to the vane port is closed.

In any of the aspects or embodiments described above and herein, the valve structure may be disposable in a first open configuration that provides fluid passage to and through the bypass air path port, and disposable in a second open configuration that provides fluid passage to and through the vane recirculation port.

In any of the aspects or embodiments described above and herein, the vane extending across the core gas path may be an inlet guide vane disposed adjacent the compressor inlet.

In any of the aspects or embodiments described above and herein, the vane extending across the core gas path is a vane disposed in the low pressure compressor section.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is a diagrammatic partial view of a gas turbine engine.
FIG. 3 is a diagrammatic partial view of a gas turbine engine.
FIG. 3A is a diagrammatic partial view of a gas turbine engine.
FIG. 3B is a diagrammatic partial view of a gas turbine engine.
FIG. 4 is a diagrammatic partial view of a gas turbine engine.
FIG. 5 is a diagrammatic partial view of a gas turbine engine.
FIG. 6 is a diagrammatic representation of a recirculation port.
FIG. 7 is a diagrammatic partial view of a gas turbine engine.
FIG. 8 is a diagrammatic partial view of a gas turbine engine.

### DETAILED DESCRIPTION

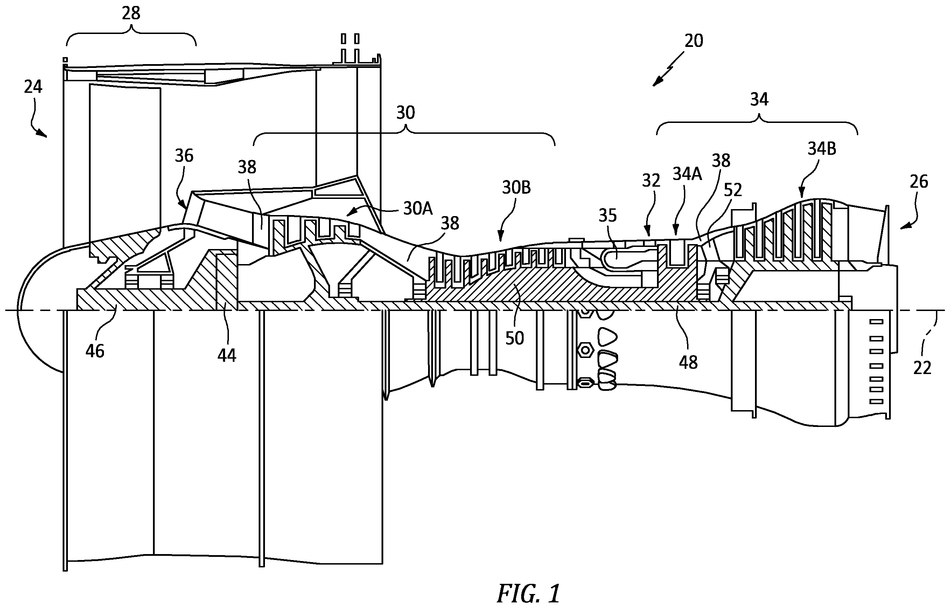

FIG. 1 shows a partially sectioned diagrammatic view of a geared gas turbine engine 20. The gas turbine engine 20 extends along an axial centerline 22 between an upstream air flow inlet 24 and a downstream air flow exhaust 26. The gas turbine engine 20 includes a fan section 28, a compressor section 30, a combustor section 32, and a turbine section 34. The combustor section 32 includes a combustor 35. The compressor section 30 includes a compressor inlet 36, a low pressure compressor 30A (LPC), and a high pressure compressor 30B (HPC). The turbine section 34 includes a high pressure turbine 34A (HPT) and a low pressure turbine 34B (LPT). The engine sections 28, 30, 32, 34 are arranged sequentially along the centerline 22. The compressor inlet 36 marks the beginning of a core gas path 38 that extends through the compressor section 30, the combustor section 32, and the turbine section 34. The fan section 28 is connected to a geared architecture 44, for example, through a fan shaft 46. The geared architecture 44 and the LPC 30A are connected to and driven by the LPT 34B through a low speed shaft 48. The HPC 30B is connected to and driven by the HPT 34A through a high speed shaft 50.

The terms "forward", "leading", "aft, "trailing" are used herein to indicate the relative position of a component or surface. As core gas air passes through the engine 20, a "leading edge" of a stator vane or rotor blade encounters core gas air before the "trailing edge" of the same. In a convention axial engine such as that shown in FIG. 1, the fan section 28 is "forward" of the compressor section 30 and the turbine section 34 is "aft" of the compressor section 30. The terms "inner radial" and "outer radial" refer to relative radial positions from the engine centerline 22. An inner radial component or path is disposed radially closer to the engine centerline 22 than an outer radial component or path. The gas turbine engine 20 diagrammatically shown is an example provided to facilitate the description herein. The present disclosure is not limited to any particular gas turbine engine configuration.

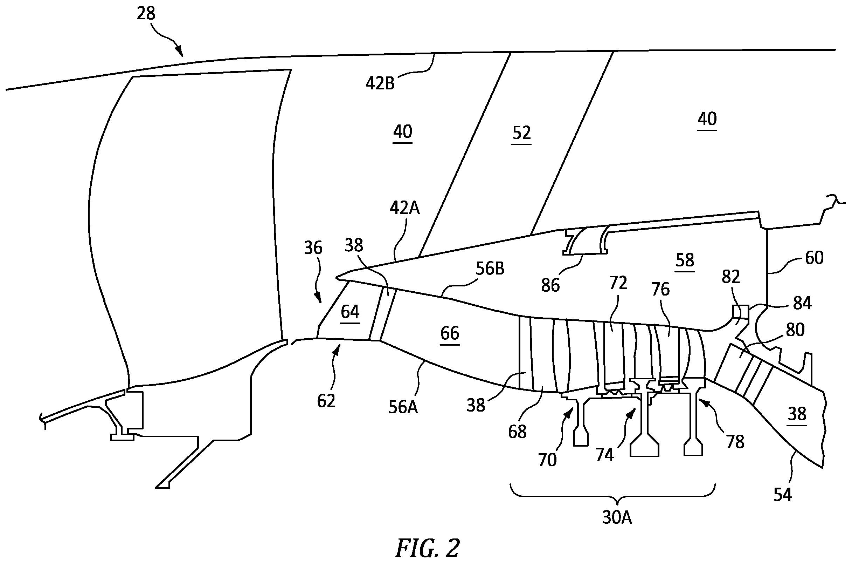

FIG. 2 is a diagrammatic partial view of a gas turbine engine 20 embodiment. FIG. 2 illustrates a fan section 28, a compressor inlet 36, a bypass air path 40, and an LPC 30A. The bypass air path 40 and the compressor inlet 36 are disposed downstream of (i.e., aft of) the fan section 28.

The bypass air path 40 is defined by an axially extending inner radial bypass structure 42A and an outer radial bypass structure 42B that are radially separated from one another and disposed radially outside of the engine core. In some embodiments (like that shown in FIG. 2), a fan exit guide vane 52 ("FEGV") is disposed aft of the compressor inlet 36 and extends between the inner and outer radial bypass structures 42A, 42B.

From the compressor inlet 36 through the LPC 30A to the intermediate case 54, the core gas path 38 may be described as an annular structure defined by inner radial core gas path structure 56A and an outer radial core gas path structure 56B. The inner and outer radial core gas path structures 56A, 56B define the flow boundaries of the core gas path 38. The inner radial core gas path structure 56A may be formed collectively from platforms extending adjacent stator vanes, and platforms attached to rotor blades. The outer radial core gas path structure 56B may be formed collectively from platforms extending adjacent stator vanes, and outer air sealing structures disposed radially outside of compressor rotor blades.

The inner radial bypass structure 42A intersects with the outer radial core gas path structure 56B at the compressor inlet 36. Proceeding aft from the compressor inlet 36, the inner radial bypass structure 42A and the outer radial core gas path structure 56B diverge from one another, defining an annular compartment 58 therebetween. In some embodiments, a firewall 60 extending radially between the inner radial bypass structure 42A and the outer radial core gas path structure 56B adjacent the forward end of the intermediate case 54 may define the aft end of the annular compartment 58.

Still referring to FIG. 2, a compressor inlet guide vane stage 62 is disposed in close proximity to, but aft of, the compressor inlet 36. The compressor inlet guide vane stage 62 includes a plurality of vanes 64 circumferentially spaced apart from one another. A plurality of struts 66 are disposed downstream of the compressor inlet guide vane stage 62. The struts 66 extend radially between the inner and outer radial core gas path structures 56A, 56B. Downstream of the struts 66, the LPC 30A includes at least one rotor stage and at least one stator vane stage. The present disclosure is not limited to any particular number of rotor stages and stator vane stages. In the non-limiting example diagrammatically shown in FIG. 2, the LPC 30A includes a first LPC stator vane stage 68, a first LPC rotor stage 70, a second LPC stator vane stage 72, a second LPC rotor stage 74, a third LPC stator vane stage 76, and a third LPC rotor stage 78. In this example, the intermediate case 54 is disposed downstream of the LPC 30A. An inlet guide vane stage 80 is disposed at the forward end of the intermediate case 54.

A compressor bleed port 82 is disposed in the outer radial core gas path structure 56B between the third LPC rotor stage 78 and the forward end of the intermediate case 54. The compressor bleed port 82 is in fluid communication with a compressor bleed valve 84 that may be operated to selectively bleed a flow of core gas from the core gas path 38 (through the compressor bleed port 82); e.g., for the purpose of increasing stability margin within the compressor section 30 during certain flight segments. The compressor bleed valve 84 is disposable in an open configuration or in a closed configuration. In the open configuration, core gas flow from the core gas path 38 passes through the compressor bleed port 82 and the compressor bleed valve 84 and into the annular compartment 58. The compressor bleed valve 84 may be disposable in a variety of different open configurations; e.g., 25% open, 50% open, 75% open, and fully open (100%). In the closed configuration, no appreciable amount of core gas flow from the core gas path 38 passes through the compressor bleed port 82 and/ or the compressor bleed valve 84 and into the annular compartment 58. An actuator (e.g., electric, pneumatic, hydraulic, or any combination thereof, or the like) may be used to actuate the compressor bleed valve 84 between the closed position and an open position. In some embodiments, the compressor bleed valve 84 may include structure (e.g., positional indicators, sensors, or the like) that provide input (e.g., signal input) regarding the position of the compressor bleed port 82. The present disclosure includes a bypass air path port(s) 86 disposed in the inner radial bypass structure 42A. Air disposed within the annular compartment 58 may exit the annular compartment 58 through the bypass air path port 86 and enter the bypass air path 40.

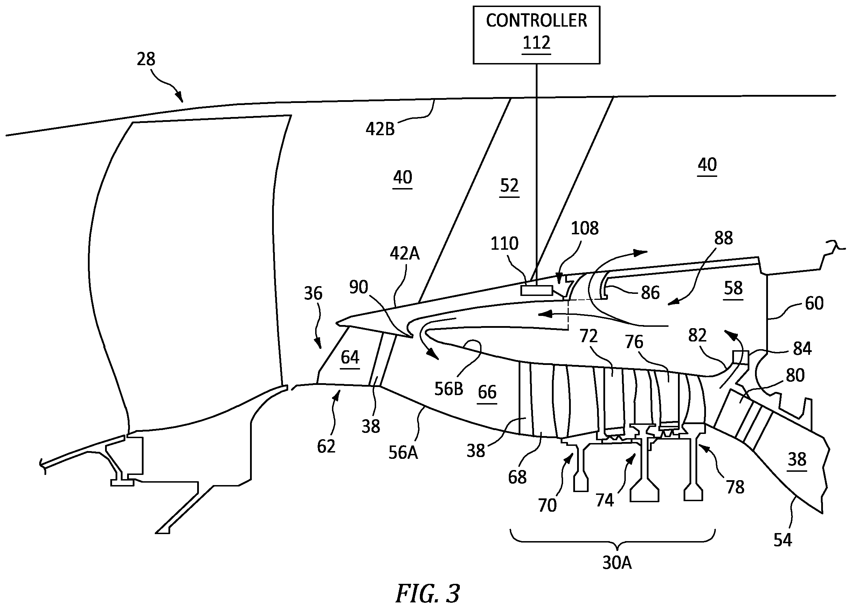

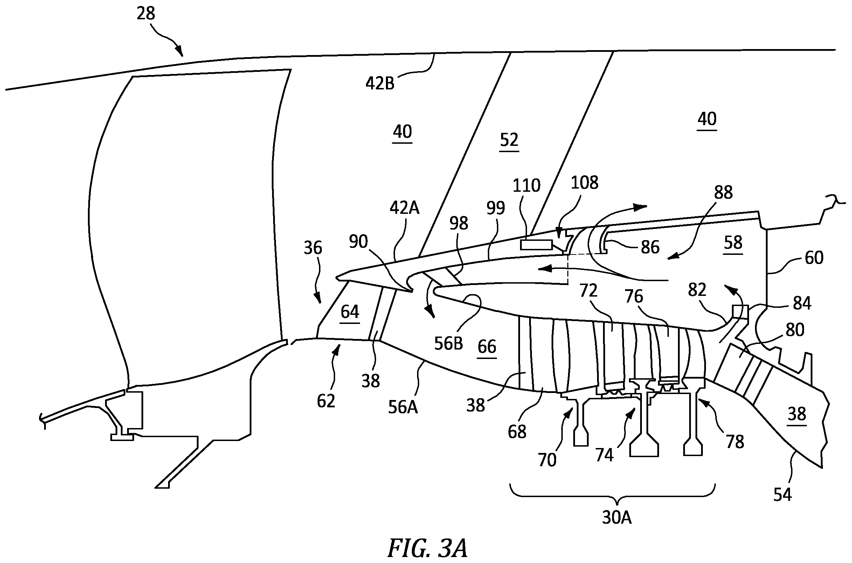

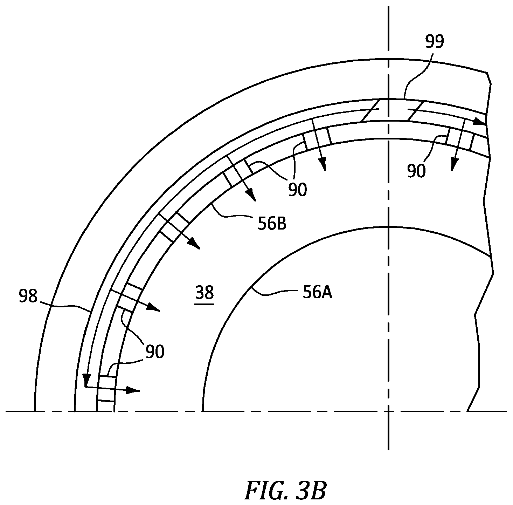

Referring to FIG. 3, the present disclosure includes a bleed air control system 88. In some embodiments, the bleed air control system 88 may include one or more core gas path (CGP) recirculation ports 90 disposed in the outer radial core gas path structure 56B, or one or more vane ports 92 configured to provide a fluid passage between the annular compartment 58 and one or more vanes within a vane stage, or some combination thereof.

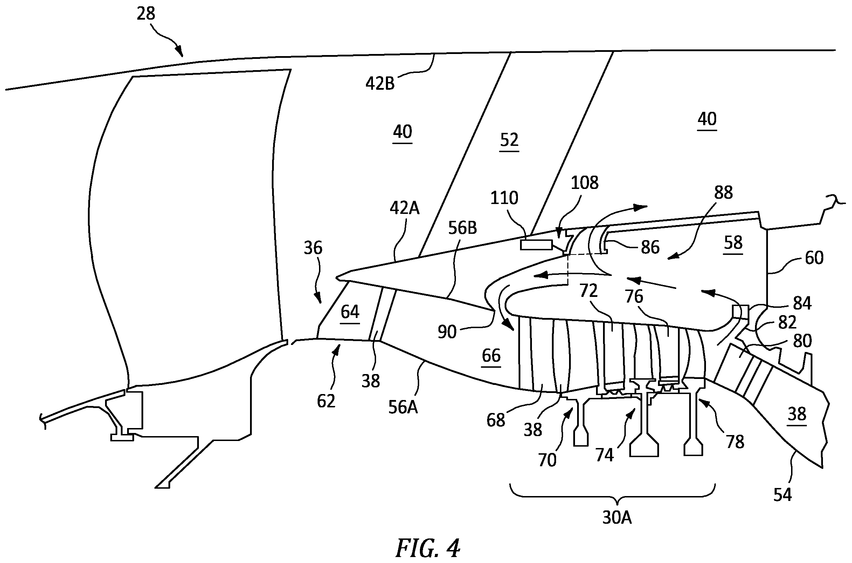

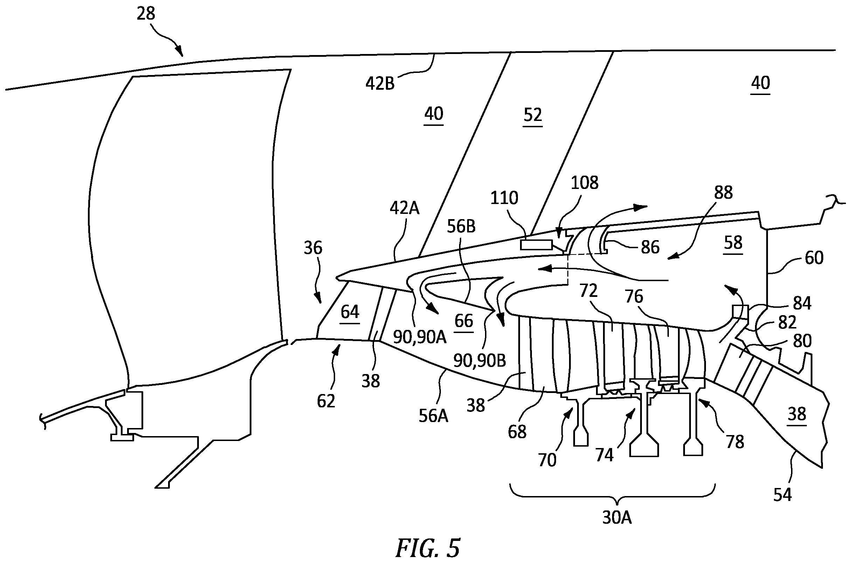

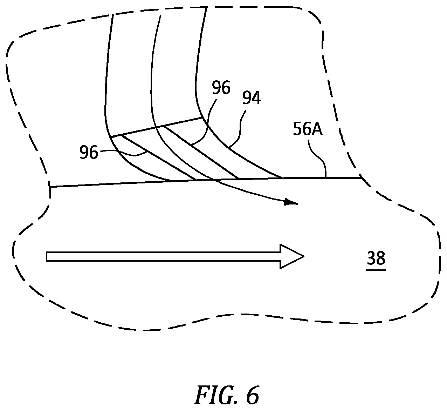

The CGP recirculation ports 90 are configured to provide a path for bleed air to exit the annular compartment 58 and directly re-enter the core gas path 38; i.e., recirculate. The CGP recirculation ports 90 may assume a number of different configurations and are not, therefore, limited to the examples provided herein. In some embodiments, the CGP recirculation ports 90 may be circumferentially spaced apart from one another around the circumference of the outer radial core gas path structure 56B. The circumferentially spaced CGP recirculation ports 90 may be uniformly spaced apart from one another (i.e., the same circumferential separation distance between adjacent pairs of the CGP recirculation ports 90) or they may be non-uniformly distributed around the circumference; e.g., to provide desirable core gas flow parameters in one or more regions of the core gas path 38. FIG. 3 illustrates an example of a CGP recirculation port 90 disposed at an axial position that is adjacent the forward end of the struts 66. FIG. 4 illustrates an example of a CGP recirculation port 90 disposed at an axial position that is adjacent the aft end of the struts 66. FIG. 5 diagrammatically illustrates first CGP recirculation ports 90A disposed adjacent the forward end of the struts 66, and second CGP recirculation ports 90B disposed adjacent the aft end of the struts 66. The present disclosure is not limited to independent CGP recirculation ports 90 spaced apart from one another. For example, in some embodiments, the recirculation passage disposed within the outer radial core gas path structure 56B may be an annular structure (e.g., a slot 94 - see FIG. 6) that extends a portion of the outer radial core gas path structure 56B circumference; e.g., three slots each circumferentially extending about one-third (120 degrees) of the circumference, or two slots each circumferentially extending about one-half (180 degrees) of the circumference, or a single slot circumferentially extending the entire (360 degrees) circumference. As diagrammatically shown in FIG. 6, the slot 94 may be configured in a grille arrangement with turning vanes 96 configured to orient the flow of recirculation air as it re-enters the core gas path 38. Another example of recirculation passages is shown in FIGS. 3A and 3B. The bleed air control system diagrammatically shown in FIG. 3A is the same as that diagrammatically shown in FIG. 3 except that the system 88 in FIG. 3A includes an annually extending manifold 98 in fluid communication with a valve structure (detailed herein) via a conduit 99. The recirculation ports 90 are in fluid communication with the manifold 98. The manifold 98 provides a passage for circumferential distribution of bleed air. FIG. 3B diagrammatically illustrates the manifold 98, the conduit 99, and the recirculation ports 90 from an axial perspective.

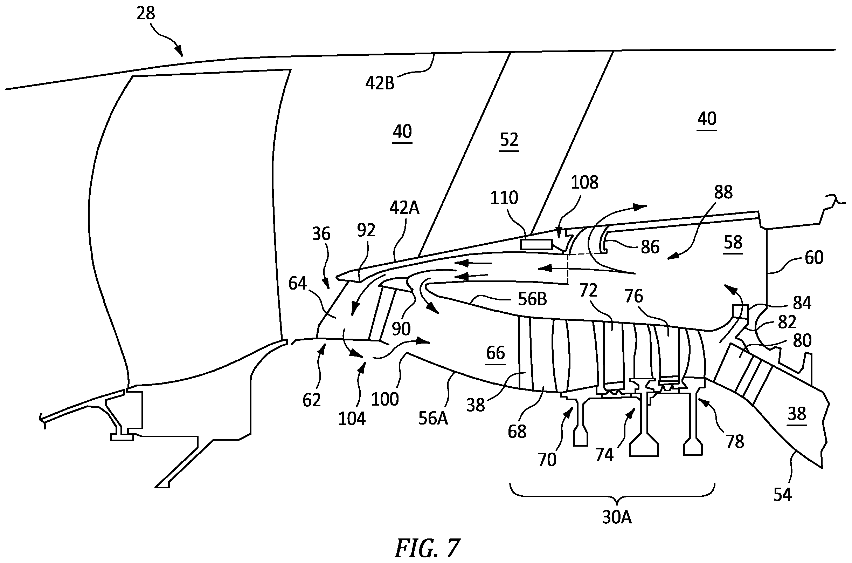

FIG. 7 diagrammatically illustrates a vane port 92 that is in fluid communication with a vane 64 in the compressor inlet guide vane stage 62 disposed adjacent the compressor inlet 36. In this example, the vanes 64 within the compressor inlet guide vane stage 62 are configured to allow air to pass through the vanes 64, enter a compartment 104 disposed radially inward of the compressor inlet guide vane stage 62, and subsequently re-enter the core gas path 38 though one or more ports 100 disposed in the inner radial core gas path structure 56A. The present disclosure is not limited to any particular vane port 92 configuration other than one that provides fluid communication between the annular compartment 58 and the vanes 64.

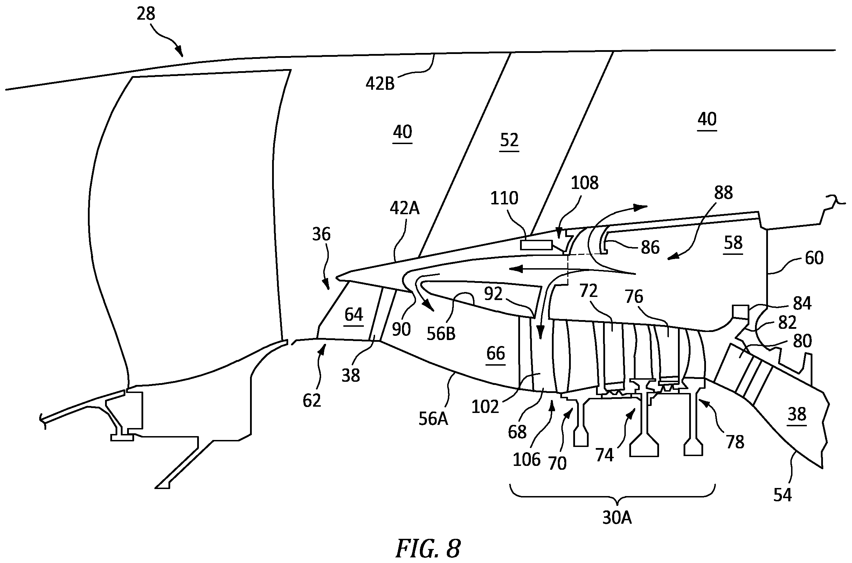

FIG. 8 diagrammatically illustrates another example of a vane port 92 configured to provide a fluid passage between the annular compartment 58 and one or more vanes within an LPC vane stage. In this embodiment, one or more vane ports 92 are in fluid communication with vanes 102 in the first LPC stator vane stage 68. The vanes 102 within the first LPC stator vane stage 68 may be configured to allow air to pass through the vanes 102 and enter a compartment 106 disposed radially inward of the first LPC stator vane stage 68. In some embodiments, the vanes 102 may include apertures (not shown) that allow the bleed air to exit the vanes 102 and enter into the core gas path 38. The present disclosure is not limited to any particular bleed air path within the vanes 102 of the first LPC stator vane stage 68.

It should be noted that the configurations described herein and shown in FIGS. 7 and 8 are intended to be non-limiting examples and the present disclosure contemplates variations thereof. For example, in some embodiments the compartments 104, 106 may be a single compartment. As another example, a configuration like that shown in FIG. 8 may also include one or more ports 100 disposed in the inner radial core gas path structure 56A; e.g., gas passed into the combined compartments 104 and 106 through vanes 102 may reenter the core gas path 38 via the ports 100 disposed in the inner radial core gas path structure 56A.

FIGS. 3-5, 7, and 8 diagrammatically illustrate a valve structure 108 disposed within the annular compartment 58 that is configured to control a flow of bleed air between the core gas path 38 and the bypass air path 40, or a flow of bleed air recirculated back into the core gas path 38, or some combination thereof, or a flow of bleed air utilized elsewhere. The valve structure 108 is diagrammatically shown in FIGS. 3-5, 7, and 8 as a single flap-type valve; e.g., a butterfly type valve. The present disclosure is not limited to any particular valve configuration and may include more than a single valve. A plunger type valve may be used alternatively. To facilitate the description herein, the valve structure 108 will be detailed hereinafter as a single flap-type valve.

The valve structure 108 may be disposed in a first closed configuration wherein the bypass air path port 86 disposed in the inner radial bypass structure 42A is closed, or in a second closed configuration wherein the flow conduit that passes bleed air to a CGP recirculation port 90 is closed, or in a third closed configuration wherein the flow conduit that passes bleed air to a vane port 92 is closed, or any combination thereof.

The valve structure 108 may be disposed in a first open configuration wherein the bypass air path port 86 disposed in the inner radial bypass structure 42A is open, or in a second open configuration wherein a flow conduit that passes bleed air to a CGP recirculation port 90 is open, or in a third open configuration wherein a flow conduit that passes bleed air to a vane port 92 is open, or any combination thereof. In a combined open configuration, the valve structure 108 may be disposed to allow a first portion of the bleed air to pass through the bypass air path port 86 and into the bypass air path 40, and a second portion of the bleed air to pass through CGP recirculation ports 90 and into the core gas path 38. The present disclosure is not limited to this combined open configuration example. An open configuration of the valve structure 108 may be a partially open configuration (i.e., less than 100% open, such as 20%, 40%, 60% open, or the like) or an open configuration of the valve structure 108 may be a fully open configuration (i.e., 100% open)

An actuator 110 (e.g., electric, pneumatic, hydraulic, or any combination thereof, or the like) may be used to actuate the valve structure 108 between the closed configurations and any of the open configurations. In some embodiments, the compressor bleed valve 84 may include structure (e.g., positional indicators, sensors, or the like) that provide input (e.g., signal input) regarding the configuration of the valve structure 108.

In some embodiments, the present disclosure may utilize a controller 112 (e.g., see FIG. 3), such as a FADEC, to monitor and control operation of the bleed air control system 88. In some embodiments, the present disclosure may utilize a dedicated controller; e.g., a controller dedicated to the bleed air control system 88 that may also be in communication with the FADEC. The term "controller" as used herein (regardless of whether the controller is a FADEC or a dedicated controller) refers to a device that included a type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to accomplish the same algorithmically and/or coordination of components. A controller 112 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. A controller 112 may include, or may be in communication with, an input device that enables a user to enter data and/or instructions, and may include, or be in communication with, an output device. The present disclosure is not limited to any particular controller architecture unless specifically stated herein. The present disclosure controller may be in communication with and configured to control the compressor bleed valve 84, or the valve structure 108, or both, including communication with positional sensors if included.

During the operation of the present disclosure bleed air control system 88, core gas bled from the compressor bleed port 82 and passed through the CGP recirculation ports 90, or through the vane ports 92, or through bypass air path ports 86, or any combination thereof, may perform several beneficial functions. Core gas flow bled from the core gas path 38 and passed through the bypass air path ports 86, as well as bleed air passed through the CGP recirculation ports 90 and therefore back into the core gas path 38, may be used to vary the bypass ratio (BPR) of the engine 20. Core gas flow bled from the core gas path 38 and recirculated into the core gas flow upstream of the compressor bleed port 82 can be used to increase (and/or selectively vary) the overall total pressure of the core gas flow passing through the LPC 30A which may be used to control stability margin within the compressor section 30. In addition, core gas flow bled from the core gas path 38 at a higher pressure and temperature can also be used to warm the annular compartment 58 and in particular the forward portion of the compartment 58 at or near the intersection of the inner radial bypass structure 42A and the outer radial core gas path structure 56B to mitigate the potential for ice accumulation. Core gas flow bled from the core gas path 38 and passed through the vane ports 92 and into the vanes 64, 102 may be selectively used in certain ground operations and/or flight segments to heat the respective vanes 64, 102 and mitigate the potential for undesirable ice accumulation on the vanes.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine (20), comprising:
a fan section (28);
a compressor section (30) having a low pressure compressor section (30A) and a high pressure compressor section (30B);
a combustion section (35);
a turbine section (34);
an annular fan bypass air path (40) defined by an outer bypass wall structure (42B) and an inner bypass wall structure (42A), wherein a core gas path (38) extends from a compressor inlet (36) and through the compressor section (30), the combustion section (35), and the turbine section (34), wherein, from the compressor inlet (36) through the low pressure compressor section (30A), an inner radial boundary structure (56A) and an outer radial boundary structure (56B) collectively define the core gas path (38);
an annular compartment (58) defined by the inner bypass wall structure (42A) and the outer radial boundary structure (56B); and
a bleed air control system (88) that includes:
a bypass air path port (86) engaged with the inner bypass wall structure (42A), configured to provide a fluid passage between the annular compartment (58) and the fan bypass air path (40);
a compressor bleed port (82) engaged with the outer radial boundary structure (56B) at a position downstream of the low pressure compressor section (30A) and upstream of the high pressure compressor section (30B);
a compressor bleed valve (84) in fluid communication with the compressor bleed port (82), the compressor bleed valve (84) disposable in an open state that allows a core gas flow bled from the core gas path (38) to enter the annular compartment (58), and disposable in a closed state; and
a core gas recirculation port (90) engaged with the outer radial boundary structure (56B).

2. The gas turbine engine (20) of claim 1, further comprising a valve structure (108) disposed in the annular compartment (58), wherein the valve structure (108) is in fluid communication with the bypass air path port (86) and the core gas recirculation port (90).

3. The gas turbine engine (20) of claim 2, wherein the valve structure (108) is disposable in a first closed configuration wherein fluid passage to the bypass air path port (86) is closed, and disposable in a second closed configuration wherein fluid passage to the core gas recirculation port (90) is closed.

4. The gas turbine engine (20) of claim 2 or 3, wherein the valve structure (108) is disposable in a first open configuration that provides fluid passage to and through the bypass air path port (86), and disposable in a second open configuration that provides fluid passage to and through the core gas recirculation port (90).

5. The gas turbine engine (20) of claim 4, wherein:
the valve structure (108) is disposable in the first open configuration and the second open configuration at the same time; and/or
the valve structure (108) is disposable in both the first closed configuration and in the second open configuration at the same time; and/or
the valve structure (108) is disposable in both the second closed configuration and in the first open configuration at the same time.

6. The gas turbine engine (20) of any preceding claim, wherein the core gas recirculation port (90) includes a first core gas recirculation port (90, 90A) engaged with the outer radial boundary structure (56B) at a first axial position disposed between the compressor inlet (36) and the low pressure compressor section (30), and a second core gas recirculation port (90, 90B) engaged with the outer radial boundary structure (56B) at a second axial position located downstream of the first axial position.

7. The gas turbine engine (20) of claim 6, further comprising a plurality of struts (66) extends across the core gas path (38) forward of the low pressure compressor section (30A), wherein the first axial position is disposed adjacent a forward end of the plurality of struts (66) and the second axial position is disposed adjacent an aft end of the plurality of struts (66).

8. The gas turbine engine (20) of any preceding claim, wherein the bleed air control system (88) further includes a vane port (92) engaged with the outer radial boundary structure (56B), wherein the vane port (92) is in fluid communication with a vane (64, 102) extending across the core gas path (38).

9. The gas turbine engine (20) of claim 8, wherein the bleed air control system (88) further includes an inner core gas recirculation port engaged with the inner radial boundary structure (56A), wherein the inner core gas recirculation port is in fluid communication with a passage disposed within the vane (64, 102) and with the vane port (92).

10. The gas turbine engine (20) of claim 8 or 9, further comprising a or the valve structure (108) disposed in the annular compartment (58), wherein the valve structure (108) is in fluid communication with the bypass air path port (86), the core gas recirculation port (90), and the vane port (92).

11. The gas turbine engine (20) of claim 10, wherein:
the valve structure (108) is disposable in a first closed configuration wherein fluid passage to the bypass air path port (86) is closed, and disposable in a second closed configuration wherein fluid passage to the core gas recirculation port (90) is closed, and disposable in a third closed configuration wherein fluid passage to the vane port (92) is closed; and/or
the valve structure (108) is disposable in a first open configuration that provides fluid passage to and through the bypass air path port (86), disposable in a second open configuration that provides fluid passage to and through the core gas recirculation port (90), and disposable in a third open configuration that provides fluid passage to and through the vane port (92).

12. A gas turbine engine (20), comprising:
a fan section (28);
a compressor section (30) having a low pressure compressor section (30A) and a high pressure compressor section (30B);
a combustion section (35);
a turbine section (34);
an annular fan bypass air path (40) defined by an outer bypass wall structure (42B) and an inner bypass wall structure (42A), wherein a core gas path (38) extends from a compressor inlet (36) and through the compressor section (30), the combustion section (35), and the turbine section (34), wherein, from the compressor inlet (36) through the low pressure compressor section (30A), an inner radial boundary structure (56A) and an outer radial boundary structure (56B) collectively define the core gas path (38);
an annular compartment (58) defined by the inner bypass wall structure (42A) and the outer radial boundary structure (56B); and
a bleed air control system (88) that includes:
a bypass air path port (86) engaged with the inner bypass wall structure (42A), configured to provide a fluid passage between the annular compartment (58) and the fan bypass air path (40);
a compressor bleed port (82) engaged with the outer radial boundary structure (56B) at a position downstream of the low pressure compressor section (30A) and upstream of the high pressure compressor section (30B);
a compressor bleed valve (84) in fluid communication with the compressor bleed port (82), the compressor bleed valve (84) disposable in an open state that allows a core gas flow bled from the core gas path (38) to enter the annular compartment (58), and disposable in a closed state;
a vane port (92) engaged with the outer radial boundary structure (56B) and in fluid communication with a vane (64, 102) extending across the core gas path (38); and
a valve structure (108) disposed in the annular compartment (58), wherein the valve structure (108) is in fluid communication with the bypass air path port (86) and the vane port (92).

13. The gas turbine engine (20) of claim 12, wherein the bleed air control system (88) further includes an inner core gas recirculation port engaged with the inner radial boundary structure, wherein the inner core gas recirculation port is in fluid communication with a passage disposed within the vane (64) and with the vane port (92).

14. The gas turbine engine (20) of claim 12 or 13, wherein:
the valve structure (108) is disposable in a first closed configuration wherein fluid passage to the bypass air path port (86) is closed, and disposable in a second closed configuration wherein fluid passage to the vane port (92) is closed; and/or
the valve structure (108) is disposable in a first open configuration that provides fluid passage to and through the bypass air path port (86), and disposable in a second open configuration that provides fluid passage to and through the vane port (92).

15. The gas turbine engine (20) of any of claims 8 to 14, wherein:
the vane (64, 102) extending across the core gas path (38) is an inlet guide vane (64) disposed adjacent the compressor inlet (36); or
the vane (64, 102) extending across the core gas path (38) is a vane (102) disposed in the low pressure compressor section (30A).
